# EUROPÄISCHE PATENTSCHRIFT

(11) **EP 2 454 078 B1**
(45) Veröffentlichungstag und Bekanntmachung des Hinweises auf die Patenterteilung: **27.04.2016**
(21) Anmeldenummer: 09777225.5
(22) Anmeldetag: 16.07.2009
(51) Int. Cl.: B29C 47/40, B29C 47/42, B29C 47/60, B29C 47/62, B30B 11/24

(54) **EXTRUDER**
EXTRUDER
EXTRUDEUSE

(43) Veröffentlichungstag der Anmeldung: 23.05.2012
(60) Teilanmeldung: 15199725.1
(73) Patentinhaber: Blach Verwaltungs GmbH & Co. KG, 74348 Lauffen a.N. (DE)
(72) Erfinder: Blach, Josef, 6632 Ehrwald (AT)
(74) Vertreter: LS-MP von Puttkamer Berngruber Loth Spuhler
(86) Internationale Anmeldenummer: PCT/EP2009/005162
(87) Internationale Veröffentlichungsnummer: WO 2011/006516

(56) Entgegenhaltungen:
- EP-A1- 0 002 131
- EP-A1- 0 611 078
- EP-A1- 0 788 867
- EP-A1- 1 832 407
- EP-A2- 0 346 757
- DE-A1- 3 134 479
- DE-A1- 10 207 145
- DE-A1- 10 233 213
- DE-A1-102004 052 055
- DE-A1-102008 016 862
- JP-A- H11 245 280
- JP-A- 2004 202 871
- US-A1- 2005 013 192
- US-B1- 6 783 270

## Beschreibung

Die Erfindung bezieht sich auf einen Zwei- oder Mehrwellen Extruder nach dem Oberbegriff des Anspruchs 1, der durch DE- A-102 332 13 offenbart ist.

Zwei- oder Mehrwellen-Extruder mit gleichsinnig antreibbaren Wellen weisen im Wesentlichen dichtkämmende Förderschnecken sowie Knetblöcke als Förderelemente auf. Geeignete Bauelemente in der benötigten Vielfalt werden zwecks einfacher Anpassung von Geometrie und Werkstoff an die verschiedenen Verfahrensaufgaben meist auf die Tragwellen drehfest aufsteckbar ausgeführt.

Um die nötige Flexibilität mit den hohen Ansprüchen an Wirtschaftlichkeit und Sicherheit in Einklang zu bringen, sind geometrische Einschränkungen, wie z.B. nur eine oder wenige Elementlängen und/oder gleiche Montageposition an den Enden, notwendig. Dies beschränkt die nötigen Schneckensteigungen, Elementtypen und/oder Baulängen wesentlich. Um die erforderliche Anpassungsfähigkeit bei den Elementen zu erreichen, müssen nur die Endpositionen und/oder Längen eingehalten werden, sodass die geometrischen Verhältnisse dazwischen, wie Steigung und Versatzwinkel, stufenlos oder in Stufen frei nach verfahrenstechnischen Gesichtspunkten wählbar werden. Effektivität und die Art des Energieübergangs von den Förderstrukturen in das Produkt beeinflussen beim Produktdurchlauf sowohl die Produkttemperatur als auch dessen Qualität. Um pulverförmige Feststoffe mit viskosen Stoffen zu benetzen und darin zu verteilen und/oder zu zerteilen, sind Scherströmungen und noch besser Dehnströmungen im hochviskosen Stoff zu generieren.

Aus EP 0 002 131 B1 ist ein selbstreinigender Extruder mit zwei Wellen und zweigängigem Schneckenprofil beschrieben, bei welchem ein Kamm der Schnecke einen geringen und der zweite einen großen Abstand zur Gehäuseinnenwand hat.

Dadurch ergeben sich zwischen zwei benachbarten Kämmen mit geringem Abstand zur Gehäuseinnenwand zwei Gänge, die durch einen Kamm mit großem Abstand zur Gehäusewand getrennt werden. Damit kann das Produkt ungehindert von einem Gang in den anderen fließen, wodurch es solange in den einen, ersten Gang fließt, bis dieser gefüllt ist, während der zweite Gang allenfalls teilgefüllt wird. Dadurch wird das Produkt nur in dem ersten Gang der nötigen homogenen Behandlung unterworfen, sodass, da der Stoffaustausch von dem ersten in den zweiten Gang unbedeutend ist, es zu einer Ungleichbehandlung des Produkts kommt.

Die Homogenisierung und Dispergierung der Feststoffe in einer viskosen Matrix, die mit den hekannten Extrudern erzielbar ist, lässt jedoch noch zu wünschen übrig. Dies gilt insbesondere für Feststoffe mit einer Teilchengröße im µm-Bereich.

Aufgabe der Erfindung ist es, einen uneingeschränkt selbstreinigenden Mehrwellen-Extruder zur Verfügung zu stellen, mit dem die Produktqualität wesentlich und effektiv verbessert wird.

Dies wird erfindungsgemäß mit dem Extruder nach dem Anspruch 1 erreicht. In den Unteransprüchen sind vorteilhafte Ausgestaltungen der Erfindung wiedergegeben.

Erfindungsgemäß werden wenigstens zweigängige Förderelemente verwendet, die im Profilquerschnitt, also im senkrechten Querschnitt zur Welle aus Kreisbögen bestehen, wobei miteinander kämmende Förderelemente sich im Wesentlichen am ganzen Umfang gegenseitig dicht abstreifen. Neben zweigängigen werden insbesondere auch dreigängige Förderelemente verwendet.

Dabei streift der Kamm des ersten Gangs die Innenwand des Gehäuses mit geringem Spiel ab, während zwischen dem Kamm des wenigstens einen anderen weiteren Ganges und der Innenwand des Gehäuses ein größerer Abstand besteht. Jedes Förderelement weist wenigstens zwei stufenlos oder in Stufen zueinander versetzte Förderabschnitte auf, wobei vorzugsweise jeder Förderabschnitt eine axiale Länge besitzt, die höchstens dem ganzen, vorzugsweise höchstens dem halben Außendurchmesser des Förderelements, also dem ganzen bzw. halben Innendurchmesser der Gehäuseinnenwand entspricht. Die axiale Länge der Förderabschnitte der miteinander kämmenden Förderelemente ist vorzugsweise gleich, kann jedoch auch unterschiedlich sein.

Damit weist jeder Förderabschnitt im Winkel von 90° bei zweigängigen und 60° bei dreigängigen eine dazu entsprechend große sowie entsprechend kleine Gangtiefe auf. D.h. bei dem erfindungsgemäßen Förderelement folgt einem ersten Kamm mit geringem Spiel zur Gehäuseinnenwand ein zweiter Kamm mit größerem Abstand zur Gehäuseinnenwand und im Winkel dazu je eine entsprechend große Gangtiefe sowie eine kleine Gangtiefe nach einem maximalen Abstand von 1Da oder ½ Da (Da= Außendurchmesser des Förderelements bzw. Innendurchmesser der Gehäuseinnenwand).

Das bedeutet, dass über alle Förderkanäle hinweg in Umfangsrichtung von Kanal zu Kanal mit einer Vervielfachung der Stromteilungen ein großer Stoffaustausch möglich ist, der mit unterschiedlichen und wechselnden Gangtiefen und entsprechenden Kamm/Gehäuse-Spielen sowohl radial als auch axial in gleicher Weise erfolgt und somit der Füllgrad in allen Kanälen gleich groß ist. Durch die ständigen geometrischen Schikanen im Wechsel von Kamm und Gang in kurzer Folge in Umfangs- und axialer Richtung wird eine besonders hohe Dichte an Dehnströmungen erzeugt. Da dies ohne Spitzenbelastungen und damit ohne unerwünschtem Viskositätsabfall in allen Fördergängen im gesamten Querschnitt und über die gesamte Länge des Förderelements erfolgt, erreicht man eine effektivere, schnellere Mischung und bei gleichmäßigerer Homogenisierung eine wesentlich höhere Produktqualität. Dazu tragen wesentlich im Übergang des Produkts von einer Tragwelle auf die nächste zwei scharfe Umlenkungen beim Zwei-Wellen-Extruder und insbesondere 12 Umlenkungen bei einem 6-Wellen-Extruder sowie 24 Umlenkungen bei einem 12-Wellen-Extruder bei, die eine weitere Intensivierung der wirksamen Kräfte im Produkt bewirken.

Damit werden über die Viskosität der kontinuierlichen Phase wiederholt Zug- und Biegekräfte auf die Dauerfestigkeit der Feststoffagglomerate ausgeübt, was deren Dauerbruch zur Folge hat. Erfindungsgemäß wird daher eine effektive Homogenisierung und Dispergierung des Feststoffs erzielt, und zwar selbst bei Feststoffteilchen mit einer Teilchengröße im µm-Bereich, also weniger als 100 µm, insbesondere weniger als 10 µm.

Mit dem erfindungsgemäßen Förderelement ist das Produkt also auf ganz kurzer Länge ständig anderen Gangtiefen und Stoffgeschwindigkeiten und damit Dehnungsvorgängen ausgesetzt.

Erfindungsgemäß wird durch den großen Abstand des einen Kamms von der Gehäuseinnenwand ein großer Stoffaustausch erzielt, während an dem Kamm, der sich an der Innenwand abstreift, nur ein geringer Stoffaustausch erfolgt, jedoch durch höchste Beanspruchung des Produkts die größte Dispergierwirkung erreicht wird. Da dieser Kamm erfindungsgemäß aus kurzen Abschnitten besteht, erfährt das Produkt jedoch nur in kleinen Bereichen eine extreme Beanspruchung, wodurch die Temperatur des Produkts insgesamt niedrig gehalten werden kann, sodass das Produkt auch in den extrem beanspruchten Bereichen nicht geschädigt und damit insgesamt schonend behandelt werden kann.

Der erfindungsgemäße Extruder ist damit auch zur Bearbeitung empfindlicher Produkte geeignet, beispielsweise zur Aufarbeitung von Polyethylenterephthalat (PET).

Das erfindungsgemäße Förderelement ist vorzugsweise einstückig ausgebildet, z.B. durch Fräsen eines entsprechenden Metallstücks. Während erfindungsgemäß der Kamm des ersten Ganges die Innenwand des Gehäuses im Wesentlichen dicht abstreift, also z. B. bei einem Außendurchmesser Da des Förderelements von weniger als 100mm nur ein geringes Spiel von beispielsweise weniger als 1, vorzugsweise weniger als 0,5 mm aufweist, entspricht der Abstand des Kamms des wenigstens einen weiteren Ganges des Schneckenelements von der Gehäuseinnenwand vorzugsweise höchstens der halben Gangtiefe des ersten Gangs, vorzugsweise jedoch mehr als 1 mm.

Die Steigung der Kämme des Förderelements beträgt vorzugsweise zwischen 1/3 Da und unendlich. D.h. das erfindungsgemäße Förderelement kann beispielsweise auch als Knetblock ausgebildet sein.

Die Gangsteigung des Förderelements kann von Förderabschnitt zu Förderabschnitt unterschiedlich sein. Auch kann sich das Verhältnis des Außendurchmessers Da zum Innen- oder Kerndurchmesser Di von Förderabschnitt Zu Förderabschnitt ändern.

Die axiale Länge des Förderelements beträgt vorzugsweise mindestens 1Da und sollte 4Da nicht übersteigen, da es bei einer Länge über 4Da schwierig zu handhaben, beispielsweise schwer von der Welle zu lösen ist.

Der erfindungsgemäße Extruder weist mindestens zwei vorzugsweise mindestens drei gleichsinnig antreibbare achsparallele Wellen auf. Die Wellen können dabei in einer geraden, ebenen Fläche angeordnet sein. Statt dessen können auch längs eines Kreises oder Kreisbogens angeordnete Wellen in dem Hohlraum des Extrudergehäuses vorgesehen sein, wobei das Extrudergehäuse an der radial innen- und außenliegenden Seite des Hohlraumes jeweils mit zur Extruderachse parallelen konkaven Kreissegmenten versehen ist, in denen die Schneckenelemente im Wesentlichen dicht geführt sind, wie beispielsweise in EP-B-0788867 beschrieben. Dabei sind vorzugsweise mindestens sechs mit gleichem Zentriwinkelabstand angeordnete Wellen im Kreis angeordnet.

Mit den erfindungsgemäßen Förderelementen kann damit ein Stoffdurchtritt durch den Wellenkranz von einer Seite des Hohlraums zur anderen erfolgen. Bei beispielsweise sechs im Kreis mit gleichem Zentriwinkelabstand angeordneten Wellen wird mit zwölf Umlenkungen des Produkts die Homogenisierung damit wesentlich gesteigert.

Die Gangtiefe des ersten Kammes des erfindungsgemäßen Förderelements kann kleiner sein als die Gangtiefe der übrigen Standard-Förderelemente des Extruders, also der Förderelemente, die mit ihren Kämmen die Innenwand des Gehäuses im Wesentlichen dicht berühren. So kann beispielsweise das Förderelement in der Materialeinfüllzone des Extruders eine besonders große Gangtiefe besitzen. Beispielsweise kann das Verhältnis des Außendurchmessers Da der Förderelemente zum Innendurchmesser Di zwischen 1,25 und 1,85 betragen. Das Verhältnis des Außendurchmessers des Förderelements zum Innendurchmesser ist vorzugsweise in der Einfüllzone des Extruders am größten.

Vorzugsweise bildet die Welle und das wenigstens eine erfindungsgemäße Förderelement, das sie trägt, ein einziges Bauteil. Durch die einstückige Ausbildung von Welle und Förderelement kann ein wesentlich höheres Drehmoment übertragen werden. Beispielsweise kann die Welle, einschließlich der Antriebswelle, sowie das Förderelement im Bereich der Einfüllzone, einschließlich der Aufschmelzzone aus einem einzigen Bauteil bestehen.

Der Einfüllzone kann dabei eine Zone mit einem Förderelement mit einem kleineren Verhältnis von Außendurchmesser zum Innendurchmesser folgen, der wiederum ein Förderelement mit einem größeren Verhältnis von Außen- zu Innendurchmesser folgen kann usw.

Zwischen zwei Förderabschnitten des Förderelements kann ein konzentrischer ringförmiger Abschnitt vorgesehen sein, der am Umfang eine geringe axiale Länge von beispielsweise maximal 1/5 der axialen Länge eines Förderabschnitts bzw. bei Förderabschnitten unterschiedlicher Länge des kürzesten Förderabschnitts besitzt und eine freie Durchtrittshöhe zur Gehäuseinnenwand aufweist, die gleich oder größer als die halbe Gangtiefe ist.

Der ringförmige Abschnitt kann kreisförmig aber auch von der Kreisform abweichen. Durch den ringförmigen Abschnitt zwischen zwei Förderabschnitten des Förderelements wird die Fördergeschwindigkeit in axialer Richtung herabgesetzt und damit die Dispergierwirkung erhöht.

Die Förderabschnitte der miteinander kämmenden Förderetemente des erfindungsgemäßen Extruders können aus Schneckenabschnitten bestehen.

Die Schneckenabschnitte sind dabei derart im Winkel versetzt angeordnet, dass der Kamm jedes Ganges des Förderelements aus aneinander anschließenden und sich abwechselnden Kammabschnitten, die die Innenwand des Gehäuses im Wesentlichen dicht abstreifen, und Kammabschnitten, die einen Abstand zur Innenwand des Gehäuses aufweisen, gebildet wird.

D.h. das Förderelement stellt ein Schneckenelement dar, wobei jeder Kamm des Schneckenelement abwechselnd aus einem Kammabschnitt, der sich an der Gehäusewand abstreift, und einem Kammabschnitt, der einen großen Abstand zu der Gehäusewand beisitzt, besteht.

Bei Schneckenabschnitten weist der Kamm, der sich an der Innenwand des Gehäuses abstreift, also einen geringen Abstand zur Gehäuseinnenwand besitzt, eine geringe Breite und der Kamm, der Im Abstand von der Gehäuseinnenwand angeordnet ist, eine große Breite auf.

Demgemäß wechseln sich bei einem Förderelement, dessen Schneckenabschnitte so Im Winkel versetzt angeordnet sind, dass der Kamm jedes Ganges des Förderelements aus aneinander anschließenden Kammabschnitten, die abwechselnd die Gehäuseinnenwand im Wesentlichen dicht abstreifen, bzw. einen Abstand zur Gehäuseinnenwand aufweisen, schmale und breite Kämme entlang dem Kamm jedes Ganges nacheinander ab.

Nach der Erfindung streifen sich die miteinander kämmenden Förderelemente gegenseitig mit geringem Spiel am ganzen Umfang ab. Zugleich streift der Kamm des ersten Ganges die Innenwand des Gehäuses dicht ab. Darüberhinaus streift der Kamm des ersten Ganges den Kern und die Flanken des korrespondierenden Förderelements ab. D.h., dieser Kamm des jeweiligen Förderabschnitts streift den Kern und die Flanken des korrespondierenden Förderabschnitts dicht ab, mit dem er kämmt. Dies gilt für Schneckertelemente als Förderelemente ebenso wie für Knetblöcke als Förderelemente. Wenn die Knetblöcke die besagten konzentrischen ringförmigen Abschnitte aufweisen, übernehmen jedoch diese das Abstreifen der Flanken.

Nachstehend ist die Erfindung anhand der beigefügten Zeichnung beispielhaft näher erläutert. Darin zeigen:
Figur 1a jeweils einen Querschnitt durch einen ersten Förderabschnitt und Figur 1b einen gegenüber Figur 1a um 180° gedrehten, zweiten Förderabschnitt eines Förderelements;
Figur 2, 3 und 4 eine perspektivische Ansicht bzw. eine Seitenansicht bzw. einen Längsschnitt von zwei miteinander kämmenden Förderelementen;
Figur 5a bis 5f jeweils einen Schnitt entlang der Linie A-A, 8-8, C-C, D-D, E-E und F-F nach Figur 3;
Figur 6 eine Seitenansicht von zwei miteinander kämmenden Förderelementen eines Zwei-Wellen-Extruders;
Figur 7 und 8 eine Seltenansicht bzw. einen Schnitt von zwei miteinander kämmenden Förderelementen mit Ringabschnitten eines Zwet-Wetlen-Extruders;
Figur 9 und 10 eine Seitenansicht bzw. einen Schnitt eines Mehrwellen-Extruders mit auf einen Kreis angeordneten Wellen; und
Figur 11 eine perspektivische Ansicht von zwei miteinander kämmenden Förderelementen von einer Variante des Förderelements gemäß Figur 2 bis 4.

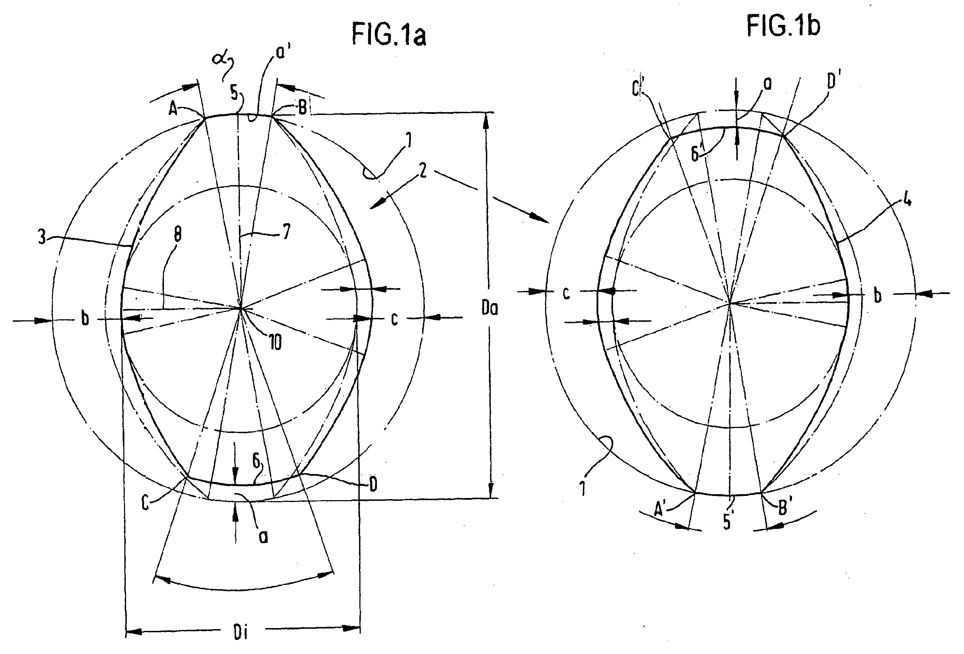

Gemäß Figur 1a und 1b weist das Gehäuse des Extruders eine zylindrische Innenwand 1 auf. Dabei wird ein 2-gängiges Förderelement 2 verwendet, das gemäß Figur 1a und 1b aus zwei Förderabschnitten 3 und 4 besteht, und zwar den ersten Förderabschnitten 3 und den zweiten, gegenüber den ersten Förderabschnitten 3 um 180° gedrehten weiteren Förderabschnitten 4.

Der Profilquerschnitt, also der senkrechte Querschnitt zur Welle der Förderabschnitte 3, 4 besteht aus Kreisbögen. Dabei gibt der Kreisbogen A-B in Figur 1a bzw. der Kreisbogen A'-B' in Figur 1b den Kamm 5, 5' des ersten Ganges wieder, der die Innenwand 1 des Gehäuses im Wesentlichen dicht, also mit nur geringem Spiel a' berührt, während der Kreisbogen C-D bzw. C'-D' den Kamm 6, 6' des zweiten Ganges darstellt, der mit einem Abstand a zur Innenwand 1 angeordnet ist. Damit weist gemäß Figur 1a der eine Gang mit dem Kamm 5 eine große Gangtiefe b und der zweite Gang mit dem Kamm 6 eine geringe Gangtiefe c auf. Die langen Kreisbögen A-C und B-D bzw. A'-C' und B'-D' setzen sich jeweils aus drei Kreisbögen zusammen, und zwar in der Mitte aus einem Kreisbogen mit einem Durchmesser, der den Kerndurchmesser Di entspricht, an den sich beiderseits jeweils ein Kreisbogen mit einem Durchmesser anschließt, dessen Radius dem Achsabstand Ax der beiden Förderelemente entspricht.

Der zweite Förderabschnitt 4 gemäß Figur 1b, der axial dem ersten Förderabschnitt 3 folgt, kann durch Spiegeln des ersten Förderabschnitts 3 an der Achse 7 oder der dazu um 90° gedrehten Achse 8 gebildet, oder durch Drehen um 180° erreicht werden.

Die Achse 7 wird dabei durch die Ebene gebildet, die die Wellenachse 10 und die Mitte des Kammes 5 schneidet, die Achse 8 durch die Ebene, die die Kreisbögen AB und BC in der Mitte und die Wellenachse 10 schneidet.

Der Außendurchmesser Da des Förderelements 2 kann z.B. 10 bis 50 mm betragen, der Innendurchmesser Di z.B. 7 bis 30 mm, der Abstand a z.B. 1 bis 3 mm. Der Kamm 5 kann einen Winkel α von z.B. 15 bis 25 ° einschließen.

D.h. der zweite Kamm 6' des zweiten Förderabschnitts 4, der durch den Kreisbogen C'-D' gebildet wird und den Abstand a zur Gehäuseinnenwand 1 aufweist, ist gegenüber dem zweiten Kamm 6 des ersten Förderabschnitts 3 um 180 ° versetzt angeordnet, desgleichen die große Gangtiefe b und die geringe Gangtiefe c.

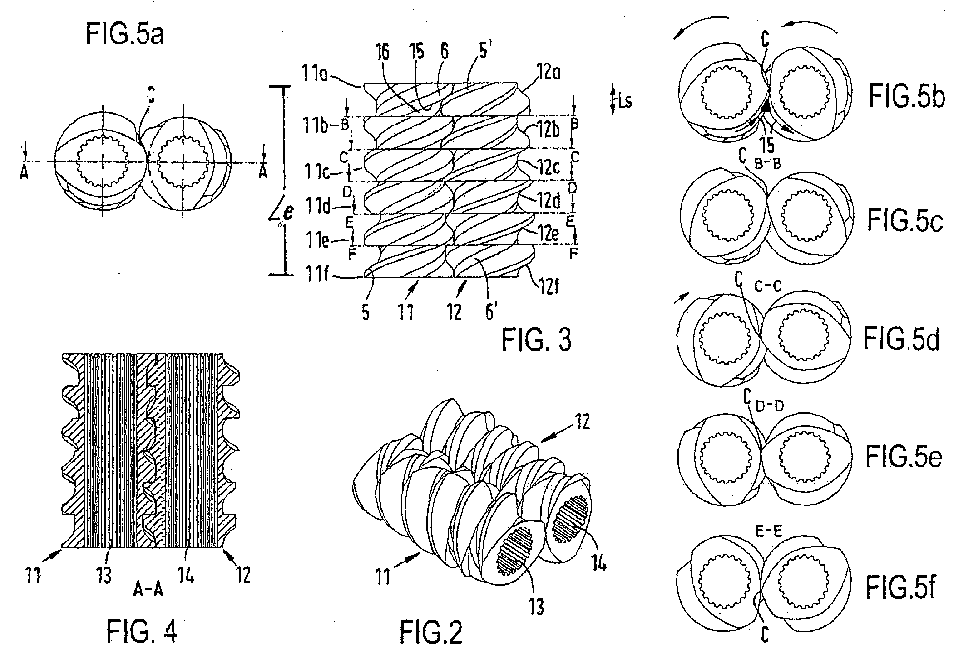

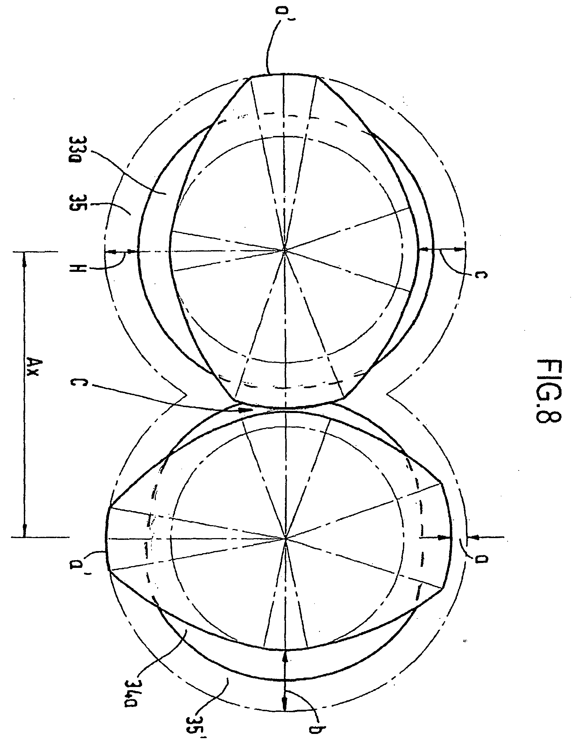

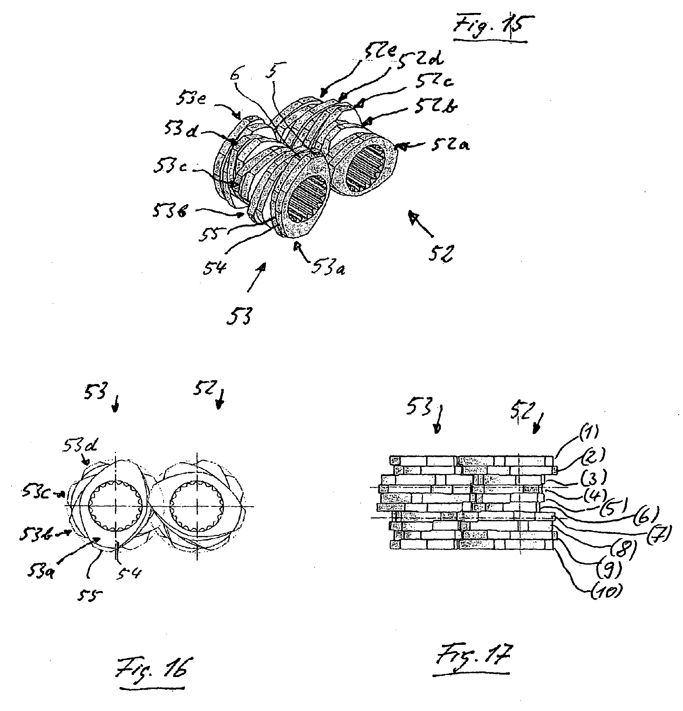

Die miteinander kämmenden Förderelemente weisen einen Achsabstand Ax auf, wie anhand der Förderlemente 31, 32 in Figur 8 veranschaulicht, und streifen sich am ganzen Umfang ab (Figur 5a, 8, 9, 13 und 16).

Wie insbesondere aus Figur 1a, 1b und 3 ersichtlich, streift der Kamm 5' des ersten Ganges des einen Förderelements 12 die Innenwand 1 des Gehäuses sowie die Flanke 15 und den Kern 16 des Förderelements 11 im wesentlichen dicht ab, mit dem er in Eingriff steht.

Gemäß Figur 2 sind die einstückigen Förderelemente 11, 12 eines Zwei-Wellen-Extruders mit einer Innenverzahnung 13, 14 versehen, um sie verdrehsicher auf zwei nicht dargestellte achsparallele, gleichsinnig drehende Wellen aufzustecken.

Jedes Förderelement 11, 12 weist eine axiale Länge Le von z.B. 2,5 Da, vorzugsweise höchstens 4 Da auf und besteht aus sechs Förderabschnitten 11a bis 11f und 12a bis 12f. Die Förderabschnitte 11a bis 11f und 12a bis 12f jedes Förderelements 11 bzw. 12 sind in Stufen fortschreitend um den gleichen Winkel, beispielsweise 36°, gegenüber einander versetzt angeordnet. Jeder Förderabschnitt 11a bis 11f und 12a bis 12f ist 2-gängig ausgebildet. Dabei berühren sich miteinander kämmende Förderabschnitte 11a bis 11f und 12a bis 12f an einer Stelle C im Wesentlichen dicht, d.h. mit einem geringen Spiel von beispielsweise von weniger als 1 mm, wie aus Figur 5a bis 5f ersichtlich.

Wie anhand der Förderabschnitte 11f und 12f dargestellt, ist dabei der Kamm 5 bzw. 5' des ersten Gangs jedes Förderabschnitts entsprechend Figur 1a und 1b so ausgebildet, dass er die Innenwand 1 des Gehäuses berührt, während zwischen dem Kamm 6, 6' und der Innenwand 1 ein größerer Abstand a besteht. Die axiale Länge Ls der Förderabschnitte 11a bis 11f und 12a bis 12f entspricht dabei jeweils etwa 1/3 des Durchmessers Da des Förderelements 11, 12, bzw. des Durchmessers der Innenwand 1 des Gehäuses (Figur 1a und 1b). Durch die sich ständig ändernde Gangtiefe entsprechend der Kämme 5, 6 und 5', 6' ist das Produkt ständig Dehnbeanspruchungen ausgesetzt. Zudem tritt im Bereich der Abstreifstellen C eine scharfe Umleitung des Produkts auf, wie in Figur 5b durch die Pfeile 15 veranschaulicht.

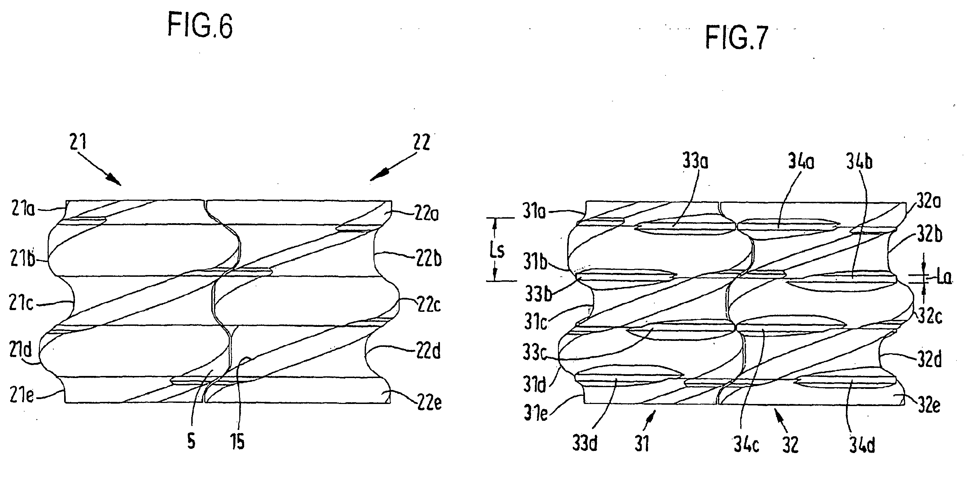

Bei der Doppelschnecke nach Figur 6 weisen die Förderelemente 21, 22 die Förderabschnitte 21a bis 21e bzw. 22a bis 22e auf, die gegenüber einander um 180° verdreht sind, also im Winkel um 180° versetzt angeordnet.

Nach Figur 7 und 8 weisen die Förderelemente 31, 32 Förderabschnitte 31a bis 31d bzw. 32a bis 32d mit jeweils einem konzentrischen ringförmigen Abschnitt 33a bis 33d bzw. 34a bis 34d auf. Die Förderabschnitte 31a bis 31d und 32a bis 32d sind um 180° verdreht. Die Größe H des Ringspaltes 35, 35' zwischen den Ringen 33a bzw. 34a und der Gehäuseinnenwand 1 liegt zwischen 1/4 und 3/4 der Gangtiefe (b), z. B. der Hälfte der Gangtiefe (Figur 8).

Die axiale Länge La der Ringe 33a bis 33d, 34a bis 34d beträgt am Umfang maximal 1/5 der Länge Ls der Förderabschnitte 31a bis 31d; 32a bis 32d. Die Ringe 33a bis 33d und 34a bis 34d brauchen nicht exakt zentrisch und kreisförmig zu sein, vielmehr reicht es aus, wenn sie im Wesentlichen zentrische runde Abschnitte darstellen.

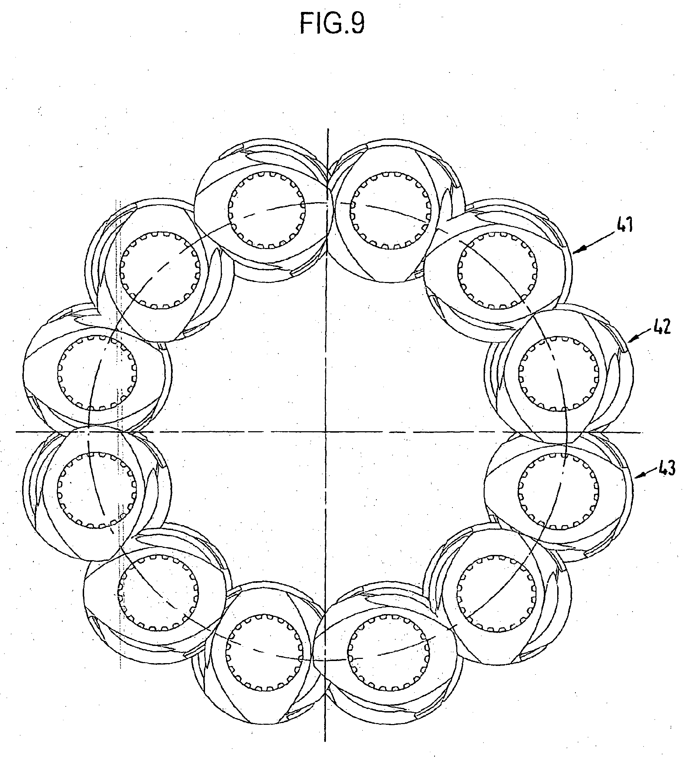

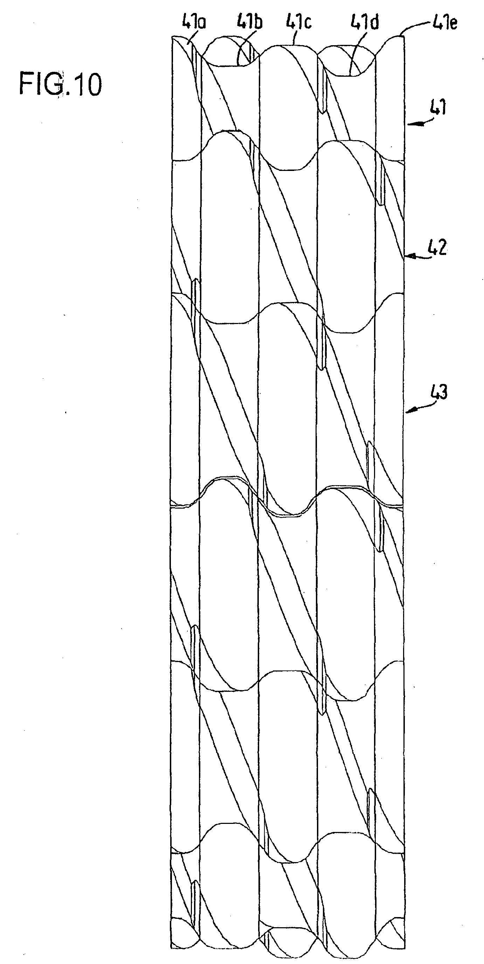

Bei dem Extruder nach Figur 9 und 10 sind die Förderelemente 41, 42, 43 ... auf achsparallelen Wellen drehfest befestigt, die längs eines Kreises angeordnet sind, wobei sich die Förderelemente 41, 42, 43 .... am ganzen Umfang gegenseitig abstreifen. Die Förderelemente 41, 42, 43 bestehen aus Förderabschnitten 41a bis 41e mit einem um 180° versetztem Profil.

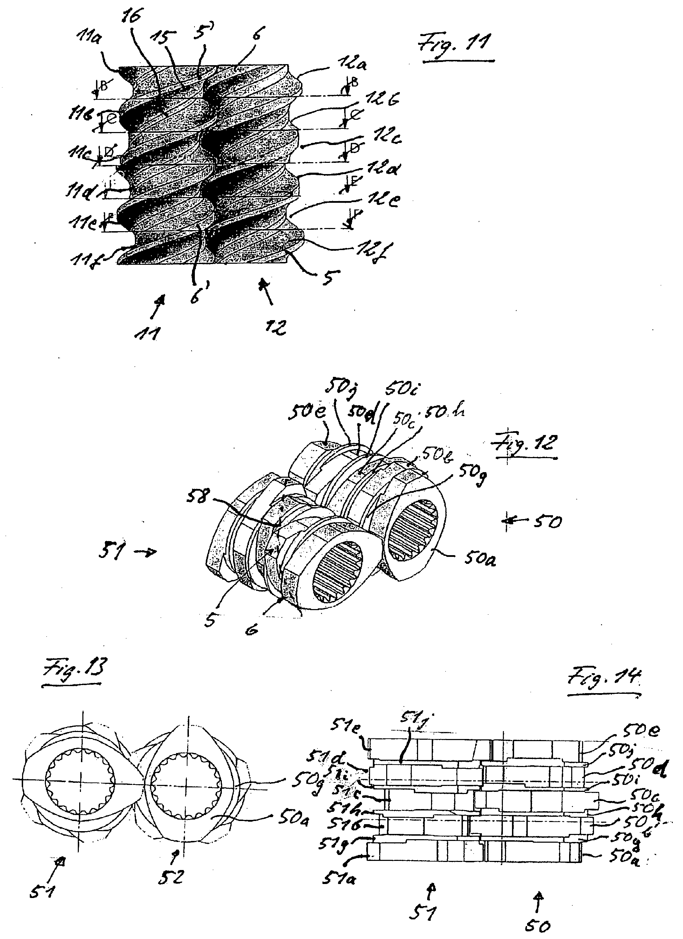

Entsprechend Figur 2 bis 5 bestehen die belden Förderelemente 11 und 12 nach Figur 11 ebenfalls aus Förderabschnitten 11a bis 11f und 12a bis 12f, die durch Schneckenabschnitte gebildet werden.

Die Schneckenabschnitte 11a bis 11f des Förderelements 11 und die Schneckenabschnitte 12a bis 12f des Förderelements 12 sind nach Figur 11 derart winkelversetzt angeordnet, dass der Kamm 5', 6 jedes Ganges der Förderelemente 11 und 12 aus aneinander anschließenden Kammabschintten 5'-, die die Gehäuseinnenwand 1 im Wesentlichen dicht abstreifen, und Kammabschnitten 6, die In einem Abstand (a) zur Gehäusewand angeordnet sind (Figur 1a und 1b), gebildet wird, wobei die Kammabschnitte S' und die Kammabschnitte 6 einander abwechseln.

Die Förderelemente 11 und 12 nach Figur 11 bilden damit jeweils Schneckenelemente.

Wie unter anderem aus Figur 11 ersichtlich, ist bei den Schneckenelementen 11 und 12 der Kamm 5, 5', der sich an der Gehäuseinnenwand im Wesentlichen dicht abstreift, schmäler ausgebildet als der Kamm 6, 6', sodass sich entlang des Kamms jedes Ganges der Schneckenelemente 11 und 12 schmale Abschnitte 5' und breite Abschnitte 6 einander abwechseln.

## Patentansprüche

1. Extruder mit einem Gehäuse mit wenigstens zwei gleichsinnig antreibbaren achsparallelen Wellen, die mit wenigstens zweigängigen Förderelementen (2, 11, 12, 21, 22, 31, 32, 41, 42, 43) versehen sind, wobei in einem zu den Wellen senkrechten Querschnitt miteinander kämmende Förderelemente (2, 11, 12, 21, 22, 31, 32, 41, 42, 43) sich gegenseitig in einem Achsabstand (Ax) mit geringem Spiel am ganzen Umfang abstreifen und zwischen dem Kamm (6, 6') des wenigstens einen weiteren Ganges und der Innenwand (1) des Gehäuses ein Abstand (a) besteht, **dadurch gekennzeichnet, dass** das Förderelement (2, 11, 12, 21, 22, 31, 32, 41, 42, 43) wenigstens zwei im Winkel verdrehte Förderabschnitte (3, 4; 11a bis 11f, 12a bis 12f; 21a bis 21e, 22a bis 22e; 31a bis 31e, 32a bis 32e; 41a bis 41e) aufweist, wobei jeder Förderabschnitt eine axiale Länge (Ls) aufweist, die höchstens dem Außendurchmesser (Da) des Förderelements (2, 11, 12, 21, 22, 31, 32, 41, 42, 43) entspricht, wobei der Abstand (a) zwischen dem Kamm (6, 6') des wenigstens einen weiteren Ganges und der Innenwand (1) des Gehäuses größer ist als das geringe Spiel, mit dem der erste Kamm (5, 5') des wenigstens zweigängigen Förderelements (2, 11, 12, 21, 22, 31, 32, 41, 42, 43) die Innenwand (1) des Gehäuses abstreift, wobei jeder Förderabschnitt (3, 4; 11a bis 11f, 12a bis 12f; 21a bis 21e, 22a bis 22e; 31a bis 31e, 32a bis 32e; 41a bis 41e) eine maximale Länge (Ls) von ½ x Da aufweist und der Verdrehwinkel von einem Förderabschnitt (3, 4; 11a bis 11f, 12a bis 12f; 21a bis 21e, 22a bis 22e; 31a bis 31e, 32a bis 32e; 41a bis 41e) zum nächsten 360°/Gangzahl ist.

2. Extruder nach Anspruch 1, **dadurch gekennzeichnet, dass** zwischen zwei Förderabschnitten (31a, 31b; 31b, 31 c; 31c, 31d; 31d, 31e; 32a, 32b; 32b, 32c; 32c, 32d; 32d, 32e) ein konzentrischer ringförmiger Abschnitt (33a bis 33d; 34a bis 34d; 50g bis 50j; 51g bis 51j) vorgesehen ist, der eine freie Durchtrittshöhe (H) zur Gehäuseinnenwand (1) besitzt, die gleich oder größer als die halbe Gangtiefe (b) ist.

3. Extruder nach einem der vorstehenden Ansprüche, **dadurch gekennzeichnet, dass** die Gangsteigung der wenigstens zwei Förderabschnitte (3, 4; 11a bis 11f, 12a bis 12f; 21a bis 21e, 22a bis 22e; 31a bis 31e, 32a bis 32e; 41a bis 41e) unterschiedlich ist.

4. Extruder nach Anspruch 1, **dadurch gekennzeichnet, dass** die axiale Länge (Ls) der Förderelemente (2, 11, 12, 21, 22, 31, 32, 41, 42, 43) höchstens dem 4-fachen Außendurchmesser (Da) der Förderelemente entspricht.

5. Extruder nach Anspruch 1, **dadurch gekennzeichnet, dass** mindestens sechs längs eines Kreises mit gleichem Zentriwinkelabstand angeordnete achsparallele Wellen vorgesehen sind.

6. Extruder nach Anspruch 1, **dadurch gekennzeichnet, dass** die miteinander kämmenden Förderelemente (2, 11, 12, 21, 22, 31, 32, 41, 42, 43) durch im Winkel versetzte Schneckenabschnitte als Förderabschnitte (3, 4; 11a bis 11f, 12a bis 12f; 21a bis 21e, 22a bis 22e; 31a bis 31e, 32a bis 32; 41a bis 41e) gebildet sind.

7. Extruder nach Anspruch 6, **dadurch gekennzeichnet, dass** die Schneckenabschnitte (11a bis 11f, 12a bis 12f) derart im Winkel versetzt angeordnet sind, dass der Kamm jedes Ganges des Förderelements (11, 12) aus aneinander anschließenden sich abwechselnden Kammabschnitten (5, 5'), die die Innenwand (1) des Gehäuses im Wesentlichen dicht abstreifen, und Kammabschnitten (6, 6'), die einen Abstand (a) zur Innenwand (1) des Gehäuses aufweisen, gebildet wird.

## Claims

1. Extruder having a housing with at least two axially parallel shafts which are capable of being driven in the same direction and provided with at least two-flight conveying elements (2, 11, 12, 21, 22, 31, 32, 41, 42, 43), wherein conveying elements (2, 11, 12, 21, 22, 31, 32, 41, 42, 43) intermeshing in a cross-section perpendicular to the shafts strip each other at an axial distance (Ax) with a small clearance over the entire circumference, and wherein there is a distance (a) between the comb (6, 6') of the at least one further flight and the inner wall (1) of the housing, **characterised in that** the conveying element (2, 11, 12, 21, 22, 31, 32, 41, 42, 43) has at least two conveying sections (3, 4; 11a to 11f, 12a to 12f; 21a to 21e, 22a to 22e; 31a to 31e, 32a to 32e; 41a to 41e) rotated through an angle, wherein each conveying section has an axial length (Ls) corresponding to at most the outer diameter (Da) of the conveying element (2, 11, 12, 21, 22, 31, 32, 41, 42, 43), wherein the distance (a) between the comb (6, 6') of the at least one further flight and the inner wall (1) of the housing is larger than the small clearance with which the first comb (5, 5') of the at least two-flight conveying element (2, 11, 12, 21, 22, 31, 32, 41, 42, 43) strips the inner wall (1) of the housing, wherein each conveying section (3, 4; 11a to 11f, 12a to 12f; 21a to 21e, 22a to 22e; 31a to 31e, 32a to 32e; 41a to 41e) has a maximum length (Ls) of ½ x Da and the torsion angle from one conveying section (3, 4; 11a to 11f, 12a to 12f; 21a to 21e, 22a to 22e; 31a to 31e, 32a to 32e; 41a to 41e) to the next one is 360°/number of flights.

2. Extruder according to claim 1, **characterised in that** between two conveying sections (31a, 31b; 31b, 31 c; 31c, 31d; 31d, 31e; 32a, 32b; 32b, 32c; 32c, 32d; 32d, 32e), a concentric annular section (33a to 33d; 34a to 34d; 50g to 50j; 51g to 51j) is provided having a free passage height (H) to the inner wall (1) of the housing which is equal to or larger than half the pitch depth (b).

3. Extruder according to any of the preceding claims, **characterised in that** the flight pitch of the at least two conveying sections (3, 4; 11a to 11f, 12a to 12f; 21a to 21e, 22a to 22e; 31a to 31e, 32a to 32e; 41a to 41e) is varying.

4. Extruder according to claim 1, **characterised in that** the axial length (Ls) of the conveying elements (2, 11, 12, 21, 22, 31, 32, 41, 42, 43) corresponds to a maximum of four times the outer diameter (Da) of the conveying elements.

5. Extruder according to claim 1, **characterised in that** at least six axially parallel shafts arranged along a circle at the same central angle are provided.

6. Extruder according to claim 1, **characterised in that** the intermeshing conveying elements (2, 11, 12, 21, 22, 31, 32, 41, 42, 43) are formed by screw sections offset at an angle as conveying sections (3, 4; 11a to 11f, 12a to 12f; 21a to 21e, 22a to 22e; 31a to 31e, 32a to 32; 41a to 41e).

7. Extruder according to claim 6, **characterised in that** the screw sections (11a to 11f, 12a to 12f) are offset at an angle such that the comb of each flight of the conveying element (11, 12) is formed by adjoining alternating comb sections (5, 5') substantially stripping the inner wall (1) of the housing closely as well as comb sections (6, 6') having a distance (a) from the inner wall (1) of the housing.

## Revendications

1. Extrudeuse comportant un boîtier présentant au moins deux arbres de transport avec axes en parallèle et susceptible d'être entraînés dans le même sens, qui sont pourvus d'éléments de transport (2, 11, 12, 21, 22, 31, 32, 41, 42, 43) à au moins double filet, des éléments de transport (2, 11, 12, 21, 22, 31, 32, 41, 42, 43) qui s'engrènent les uns avec les autres dans une section transversale perpendiculaire aux arbres se raclant réciproquement sur toute la périphérie dans un espacement d'axe (Ax) avec faible jeu, et un espacement (a) se trouvant entre la crête (6, 6') dudit au moins un autre filet et la paroi intérieure (1) du boîtier, **caractérisée en ce que** l'élément de transport (2, 11, 12, 21, 22, 31, 32, 41, 42, 43) présente au moins deux tronçons de transport à torsion angulaire (3, 4 ; 11a à 11f, 12a à 12f ; 21a à 21e, 22a à 22e , 31a à 31e ; 32a à 32 e ; 41a à 41e), chaque tronçon de transport présentant une longueur axiale (Ls) qui correspond au plus au diamètre extérieur (Da) de l'élément de transport (2, 11, 12, 21, 22, 31, 32, 41, 42, 43), l'espacement (a) entre la crête (6, 6') dudit au moins un autre filet et la paroi intérieure (1) du boîtier étant supérieur au faible jeu avec lequel la première crête (5, 5') dudit élément de transport à au moins double filet (2, 11, 12, 21, 22, 31, 32, 41, 42, 43) racle la paroi intérieure (1) du boîtier, chaque tronçon de transport (3, 4 ; 11a à 11f, 12a à 12f ; 21a à 21e, 22a à 22e ; 31a à 31e ; 32a à 32e ; 41a à 41e) présentant une longueur maximum (Ls) de ½ x Da et l'angle de torsion d'un tronçon de transport (3, 4 ; 11a à 11f, 12a à 12f ; 21a à 21e, 31a à 31e ; 22a à 22e , 32a à 32e ; 41a à 41e) au suivant étant de 360° par nombre de filets.

2. Extrudeuse selon la revendication 1, **caractérisée en ce qu'**entre deux tronçons de transport (31, 31b ; 31b, 31c ; 31c, 31d ; 31d, 31e ; 32a, 32b ; 32b, 32c ; 32c, 32d ; 32d, 32e) est prévu un tronçon annulaire concentrique (33a à 33d ; 34a à 34d ; 50g à 50j ; 51g à 51j) qui possède une hauteur de passage (H) libre vers la paroi intérieure de boîtier (1) qui est égale ou supérieure à la demi-profondeur de filet (b).

3. Extrudeuse selon l'une des revendications précédentes, **caractérisée en ce que** le pas de filet desdits au moins deux tronçons de transport (3, 4 ; 11a à 11f, 12a à 12f ; 21a à 21e, 22a à 22e ; 31a à 31e ; 32a à 32e ; 41a à 41e) est différent.

4. Extrudeuse selon la revendication 1, **caractérisée en ce que** la longueur axiale (Ls) des éléments de transport (2, 11, 12, 21, 22, 31, 32, 41, 42, 43) correspond au plus au quadruple du diamètre (Da) des éléments de transport.

5. Extrudeuse selon la revendication 1, **caractérisée en ce qu'**il est prévu au moins six arbres parallèles à l'axe agencés le long d'un cercle avec le même espacement d'angle au centre.

6. Extrudeuse selon la revendication 1, **caractérisée en ce que** les éléments de transport (2, 11, 12, 21, 22, 31, 32, 41, 42, 43) qui s'engrènent les uns avec les autres sont formés par des tronçons de vis sans fin angulairement décalés servant de tronçons de transport (3, 4 ; 11a à 11f, 12a à 12f ; 21a à 21e, 22a à 22e ; 31a à 31e ; 32a à 32e ; 41a à 41e).

7. Extrudeuse selon la revendication 6, **caractérisée en ce que** les tronçons de vis sans fin (11a à 11f, 12a à 12f) sont agencés avec un décalage angulaire tel que la crête de chaque filet de l'élément de transport (11, 12) est formée par des tronçons de crête (5, 5') se suivant les uns aux autres en alternance qui raclent de manière sensiblement serrée la paroi intérieure (1) du boîtier, et par des tronçons de crête (6, 6') qui présentent un espacement (a) par rapport à la paroi intérieure (1) du boîtier.
